# EUROPÄISCHE PATENTSCHRIFT

(11) **EP 4 146 949 B1**
(45) Veröffentlichungstag und Bekanntmachung des Hinweises auf die Patenterteilung: **27.12.2023**
(21) Anmeldenummer: 21724215.5
(22) Anmeldetag: 30.04.2021
(51) Int. Cl.: F16C 17/12, F16C 19/24, F16C 19/30, F16C 19/34, F16C 33/64, F16C 33/60

(54) **VERFAHREN ZUM HERSTELLEN VON RINGSEGMENTEN UND RINGSEGMENT FÜR EINEN SEGMENTIERTEN WÄLZLAGERRING MIT EINER GEHÄRTETEN WÄLZLAGERLAUFBAHN**
METHOD FOR PRODUCING RING SEGMENTS, AND RING SEGMENT FOR A SEGMENTED ROLLING BEARING RING HAVING A HARDENED ROLLING BEARING RACEWAY
PROCÉDÉ POUR PRODUIRE DES SEGMENTS DE BAGUE, ET SEGMENT DE BAGUE POUR UNE BAGUE DE ROULEMENT SEGMENTÉE AYANT UN CHEMIN DE ROULEMENT DURCI

(30) Priorität: 05.05.2020 DE 102020205669
(43) Veröffentlichungstag der Anmeldung: 15.03.2023
(73) Patentinhaber: thyssenkrupp rothe Erde Germany GmbH, 44137 Dortmund (DE); thyssenkrupp AG, 45143 Essen (DE)
(72) Erfinder: BURTCHEN, Marco, 59555 Lippstadt (DE); TÖFKE, Matthias, 59555 Lippstadt (DE); CLAUS, Wolfgang, 59510 Lippetal (DE); VOSS, Bernd, 59556 Lippstadt (DE)
(74) Vertreter: thyssenkrupp Intellectual Property GmbH
(86) Internationale Anmeldenummer: PCT/EP2021/061458
(87) Internationale Veröffentlichungsnummer: WO 2021/224139

(56) Entgegenhaltungen:
- CN-A- 109 082 504
- DE-A1- 3 725 027

## Beschreibung

### Stand der Technik

Die Erfindung betrifft ein Verfahren zum Herstellen von Ringsegmenten für einen segmentierten Wälzlagerring mit mindestens einer gehärteten Wälzlagerlaufbahn nach dem Oberbegriff des Anspruchs 1, sowie ein Ringsegment für einen segmentierten Wälzlagerring mit einer gehärteten Wälzlagerlaufbahn nach dem Oberbegriff des Anspruchs 10.

Für die Tragfähigkeit und Haltbarkeit von Wälzlagern ist die Fertigung der Wälzlagerringe, zwischen denen Wälzkörper auf Wälzlagerlaufbahnen abrollen, von besonderer Bedeutung. Zur Verbesserung der Tragfähigkeit von Wälzlagern ist es üblich, bei der Fertigung der Wälzlagerringe zumindest die daran vorgesehenen Laufbahnen aus gehärtetem Stahl herzustellen.

Bis zu einem Durchmesser von 4 bis ca. 10 Metern können Ringe von Wälzlagern in einem Stück gefertigt, ausgeliefert und montiert werden. Mit zunehmendem Durchmesser der Wälzlagerringe steigt der Aufwand insbesondere für Transport und Montage allerdings unverhältnismäßig stark an, so dass es für größere Wälzlager bekannt ist, die Wälzlagerringe in Umfangsrichtung zu segmentieren, um Transport und Montage zu vereinfachen.

Für die Herstellung von Ringsegmenten für derartige segmentierte Wälzlagerringe mit mindestens einer gehärteten Wälzlagerlaufbahn gibt es im Stand der Technik die folgenden Verfahren:
Zum einen können die Wälzlageringe in einem Stück hergestellt werden, indem an einem Ringrohling beispielsweise durch zerspanende Bearbeitung mindestens eine Laufbahn ausgebildet wird, welche anschließend gehärtet wird. Der fertige Wälzlagerring mit gehärteter Laufbahn wird dann für Transport und Montage, beispielsweise durch Drahterodieren, in Segmente unterteilt. Bei diesem Verfahren werden Materialspannungen, die beim Härten der Laufbahn in den Ring eingebracht werden, von dem gesamten Ring aufgenommen. Die Form des geschlossenen Rings reduziert daher den dabei auftretenden Härteverzug. Nachteilig ist, dass die erreichbaren Ringdurchmesser durch die Größe der Herstellungsmaschinen begrenzt sind und ein verzugarmes Zerteilen der Ringe in Segmente aufwendig ist. Derartig segmentierte Lagerringe sind beispielsweise bekannt aus DE 10 2017 206 246 A1.

Bei einem alternativen Herstellungsverfahren von Ringsegmenten für Wälzlagerringe, insbesondere für solche mit besonders großem Durchmesser von beispielsweise über 10 Metern, werden die Segmente einzeln hergestellt und mit gefrästen Aufnahmen für Laufbahnplatten versehen. Anschließend werden durchgehärtete Laufbahnplatten (für Axialbahnen) bzw. durchgehärtete, rechteckig profilierte Laufbahndrähte (für Radialbahnen) in die vorgefrästen Aufnahmen eingesetzt, auf denen im zusammengebauten Zustand des Wälzlagers die Wälzkörper abrollen.

Ein Großwälzlager mit eingelegten Laufdrähten ist beispielsweise aus DE 37 25 027 A1 bekannt.

Zum Schutz der Wälzkörper und der Laufbahnplatten sind die Wälzkörper an den Stößen der Laufbahnplatten und -drähte aus der Last zu nehmen. Dazu werden die Laufbahnplatten und -drähte im Bereich der Stöße tiefergelegt. Bei breiten Radialbahnen müssen zudem mehrere Laufbahndrähte in axialer Richtung übereinander angeordnet werden, da diese nur bis zu einer begrenzten Höhe verformungsarm durchgehärtet werden können. Nachteilig bei großen Lagern mit Laufbahnplatten und -drähten ist, dass die Lastaufnahme insbesondere in radialer Richtung durch die vielen Stöße derart eingeschränkt ist, dass sich hieraus eine deutliche Grenze für die Auslegung des Lagers ergibt.

Nachteilig ist ferner, dass die Platten- und Drahtbetten in den Ringsegmenten sehr genau gefertigt werden müssen, um möglichst geringe Abweichungen in den Laufbahnen von Segment zu Segment zu erhalten. Auch die Fertigung der Platten muss hohen Präzisionsanforderungen genügen, damit aus diesen Elementen keine Höhenabweichungen der Laufbahn resultieren. Da Ringsegmente und Laufbahnplatten/-drähte aufgrund ihrer Größe jeweils einzeln auf der jeweiligen Maschine gefertigt werden, bringen die zwei Baugruppen voneinander unabhängig Abweichungen in das Laufsystem ein.

Ein Verfahren zum Herstellen von Ringsegmenten nach dem Oberbegriff des Anspruchs 1, sowie ein Ringsegment nach dem Oberbegriff des Anspruchs 10 sind bekannt aus CN 109 082 504 A.

Aufgabe der Erfindung ist es daher, ein Verfahren zum Herstellen von Ringsegmenten und ein Ringsegment für einen segmentierten Wälzlagerring mit mindestens einer gehärteten Wälzlagerlaufbahn anzugeben, die in einfacher Weise für größere Ringdurchmesser skalierbar sind und zugleich eine erhöhte Tragfähigkeit des segmentierten Wälzlagerrings erzeugen.

Diese Aufgabe wird gelöst durch ein Verfahren zum Herstellen von Ringsegmenten für einen segmentierten Wälzlagerring mit den Merkmalen des Anspruchs 1.

Hierdurch wird ein Verfahren zum Herstellen von Ringsegmenten für einen segmentierten Wälzlagerring mit mindestens einer gehärteten Wälzlagerlaufbahn angegeben, bei dem die folgenden Schritte durchgeführt werden:
a) Herstellen von Ringsegmenten aus Wälzlagerstahl mit einem Krümmungsradius und jeweils mindestens einem ungehärteten Laufbahnabschnitt,
b) Induktives Randschichthärten zumindest der ungehärteten Laufbahnabschnitte zur Erzeugung gehärteter Laufbahnabschnitte,
c) Richten der Ringsegmente zum Anpassen des Krümmungsradius an einen Soll-Radius des segmentierten Wälzlagerrings, und
d) Spanende Bearbeitung der Ringsegmente auf vorgegebene Endabmessungen.

Das erfindungsgemäße Verfahren zeichnet sich demnach durch ein segmentweises Randschichthärten der Laufbahnabschnitte mit einem anschließenden Richten und einer das Verfahren vorzugsweise abschließenden spanenden Bearbeitung der Ringsegmente aus. Durch die segmentweise Bearbeitung der Ringsegmente während des Herstellungsprozesses ist das Verfahren einfach auf größere Ringdurchmesser skalierbar. Zur Durchführung des Verfahrens werden nämlich nur solche Maschinen benötigt, die für die Bearbeitung einzelner Ringsegmente ausgelegt sind.

Im Stand der Technik wurde von einem segmentweisen Randschichthärten der Wälzlagerlaufbahn bisher Abstand genommen, weil die, vorzugsweise geschmiedeten, Ringsegmente beim segmentweisen Härten eine Änderung der geometrischen Form (Härteverzug) ausbilden, durch die die Ringsegmente nach dem Härten nicht mehr zu einem Ring zusammenfügbar sind. Insbesondere bei großen Ringsegmenten führt das segmentweise Härten zu einem Härteverzug, der im Bereich der Segmentränder die Größenordnung der beim Randschichthärten erreichbaren Einhärtetiefe erreicht oder sogar übersteigt.

Erst durch die erfindungsgemäße Kombination des Richtens und der spanenden Bearbeitung wird eine präzise Formgebung der Ringsegmente auf vorgegebene Endabmessungen erreicht, bei der die während des Randschichthärtens erreichte Einhärtetiefe über den gesamten Laufbahnabschnitt zumindest zu einem Großteil nutzbar bleibt. Die Tragfähigkeit des Wälzlagerrings wird dadurch erhöht. Insbesondere würde eine reine spanende Nachbearbeitung zu einem zu hohen Abtrag vor allem im Bereich der Segmentränder der gehärteten Laufbahnsegmente führen, wodurch die Tragfähigkeit des gesamten Lagers eingeschränkt wäre.

Durch die induktive Härtung der Laufbahnabschnitte direkt am Segment entfällt eine separate Anfertigung von Laufbahnplatten und -drähten. Da die Laufbahnabschnitte erfindungsgemäß in das Ringsegment integriert sind, reduziert sich die Anzahl der Baugruppen, die einen Einfluss auf Abweichungen der späteren Laufbahn haben. Die dadurch erhöhte Präzision der Laufbahngeometrie trägt zur verbesserten Haltbarkeit und Tragfähigkeit des segmentierten Lagerrings und somit des gesamten Lagers bei.

Erfindungsgemäß umfasst das Richten ein thermisches Richten, bei dem zur Anpassung des Krümmungsradius durch stellenweisen Wärmeeintrag lokale Gefügeveränderungen in die Ringsegmente eingebracht werden. Die lokalen Gefügeveränderungen führen zu einer Verformung des Ringsegments. Durch geeignete Positionierung der Stellen des Wärmeeintrags (Thermospots) auf dem Ringsegment wird die Anpassung des Krümmungsradius an den Soll-Radius erreicht.

Vorzugsweise wird das thermische Richten iterativ in mehreren Schritten ausgeführt, wobei eine Auskühlung des Ringsegmentes auf Raumtemperatur abgewartet wird, bevor das Ringsegment erneut an einer oder mehreren weiteren Stellen erwärmt wird. Auf diese Weise kann eine sehr feine Justierung der Verformung des Ringsegments vorgenommen werden. Durch beispielsweise 3 bis 5-malige iterative Ausführung des thermischen Richtens kann das Ringsegment schon nahe an die vorgegebenen Endabmessungen gebracht werden, wodurch sich der erforderliche Abtrag bei der nachfolgenden spanenden Bearbeitung verringert.

In einer bevorzugten Ausführungsform erfolgt vor dem thermischen Richten ein mechanisches Richten der Ringsegmente. Das mechanische Richten erfolgt vorzugsweise in großen Pressen. Beim mechanischen Richten wird das Ringsegment über die Streckgrenze des Wälzlagerstahls hinaus verbogen (plastische Verformung). Nach dem Entlasten von der Biegekraft verbleibt das Ringsegment dann in einer veränderten gebogenen Form. Durch die Kombination des thermischen Richtens mit einem vorangehenden mechanischen Richten kann die für den Richtprozess erforderliche Zeit deutlich reduziert werden. Durch das mechanische Richten kann beispielsweise eine Grobeinstellung des Krümmungsradius auf den Soll-Radius erreicht werden, während eine Feineinstellung, insbesondere lokaler Radiusabweichungen durch das thermische Richten erfolgt. Aufgrund der beim mechanischen Richten auftretenden Materialbelastungen kann es aber auch, insbesondere bei dünneren Lagerringen, vorteilhaft sein auf das mechanische Richten zu verzichten, um mögliches Reißen zu verhindern.

Bevorzugt erfolgt die Anpassung des Krümmungsradius an den Soll-Radius beim Richten mit einer Toleranz, die es ermöglicht, eine vorgegebene Mindesteinhärtetiefe über den gesamten gehärteten Laufbahnabschnitt des jeweiligen Ringsegments bei der spanenden Bearbeitung zu erhalten. Die Toleranz beim Richten ist demnach vorzugsweise so gewählt, dass sie höchstens der Differenz zwischen einer beim Randschichthärten erzeugten Einhärtetiefe und der vorgegebenen Mindesteinhärtetiefe entspricht. Die Mindesteinhärtetiefe kann dabei durch die Auslegung des Wälzlagerrings vorgegeben sein. Auf diese Weise kann eine vorgegebene Mindesttragfähigkeit des Wälzlagerrings sichergestellt werden.

Weiterhin ist gemäß einer bevorzugten Ausführungsform vorgesehen, dass der Krümmungsradius der Ringsegmente vor dem Randschichthärten unter Berücksichtigung eines zu erwartenden Härteverzuges abweichend von dem Soll-Radius des segmentierten Wälzlagerrings vorgegeben wird. Bei der Herstellung der Ringsegmente aus Wälzlagerstahl werden diese in einem Formgebungsprozess durch Walzen und/oder Schmieden mit einem Krümmungsradius versehen. Beim Randschichthärten wird das Material des Ringsegments zumindest teilweise wieder erwärmt, wodurch sich im Formgebungsprozess eingebrachte Eigenspannungen unter Verformung des Ringsegments wieder abbauen können. Typischerweise verformt sich das Material wieder in Richtung seiner ursprünglichen, beispielsweise geraden Form, so dass der Krümmungsradius beim Randschichthärten zunehmen kann. Es kann daher vorteilhaft sein, den Krümmungsradius insbesondere kleiner als den Soll-Radius des segmentierten Wälzlagerrings vorzugeben. Dadurch kann der Aufwand beim nachfolgenden Richten und der spanenden Bearbeitung reduziert werden.

Bevorzugt erfolgt nach dem Richten und vor der spanenden Bearbeitung ein Anlassen der Ringsegmente. Das Anlassen dient dem Zweck innere Spannungen, die durch den Härteprozess entstanden sind, zu reduzieren. Durch das Anlassen kann die Härte, Zugfähigkeit und Zähigkeit der gehärteten Laufbahnabschnitte eingestellt werden.

Während der spanenden Bearbeitung kann bevorzugt ein Bearbeitungsschritt des Fräsens ausgeführt werden. Durch das Fräsen kann das Ringsegment auf die vorgegebenen Endabmessungen gebracht werden und es werden Laufflächen auf den gehärteten Laufbahnabschnitten hergestellt, auf denen die Wälzkörper abrollen können. Bei erhöhten Ansprüchen an die Oberflächengüte können die Flächen, vorzugsweise auf der gleichen Maschine, noch geschliffen werden. Eine Nachbearbeitung von radialen Laufbahnflächen ist gegebenenfalls mit einer Topfschleifscheibe möglich.

Vorzugsweise erfolgt die spanende Bearbeitung mit einer computergesteuerten Zerspanungsmaschine anhand eines 3D-Modells. Mittels computergesteuerter CNC-Maschinen lassen sich besonders einfach die durch das 3D-Modell vorgegebenen Endabmessungen des Ringsegments erreichen. Auch wird die Gleichförmigkeit der nacheinander hergestellten Einzelsegmente verbessert, so dass sich die einzelnen Laufbahnabschnitte zu einem gleichmäßigen Laufbahnsystem zusammenfügen lassen.

Bevorzugt nimmt die Zerspanungsmaschine zunächst die Geometrie des gerichteten Ringsegments auf und richtet ein Koordinatensystem des 3D-Modells unter Berücksichtigung des Volumens des im Bereich des gehärteten Laufbahnabschnitts abzutragenden Materials aus. Dazu umfasst die Zerspanungsmaschine vorzugsweise ein maschinenintegriertes Messsystem, das die Geometrie des Ringsystems beispielsweise optisch oder über einen Messtaster erfassen kann. Die Ausrichtung des Koordinatensystems erfolgt vorzugsweise so, dass das Volumen des im Bereich des gehärteten Laufbahnabschnitts abzutragenden Materials durch den Ausrichtungsprozess verringert und bevorzugt minimiert wird.

Die Vorteile des erfindungsgemäßen Verfahrens kommen besonders bei großen Großwälzlagern zum Tragen, bei denen die segmentierte Herstellungsweise die erforderliche Größe der Herstellungsmaschinen reduziert. Der Soll-Radius des Wälzlagerrings beträgt daher vorzugsweise mindestens 4 Meter. Das Herstellungsverfahren ist geeignet für nahezu beliebig große Wälzlagerringe, beispielsweise mit Durchmessern von über 20 Metern.

Vorrichtungsmäßig wird die Aufgabe gelöst durch ein Ringsegment für einen segmentierten Wälzlagerring mit mindestens einer induktiv randschichtgehärteten Wälzlagerlaufbahn, das durch das zuvor beschriebene erfindungsgemäße Verfahren hergestellt wurde. Durch das erfindungsgemäße Herstellungsverfahren kann sichergestellt werden, dass der induktiv gehärtete Laufbahnabschnitt des Ringsegments über die gesamte Erstreckung des Ringsegments eine Mindestrandhärte von mehreren Millimetern aufweist. Vorzugsweise weist der induktiv gehärtete Laufbahnabschnitt des Ringsegments eine Mindestrandhärtetiefe von größer gleich 4 mm auf.

Weitere vorteilhafte Ausführungsformen sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

### Kurzbeschreibung der Zeichnungen

- Fig. 1a bis 1c: zeigen schematisch den Herstellungsprozess von Ringsegmenten mit einem Krümmungsradius und einem ungehärteten Laufbahnabschnitt,
- Fig. 2a: zeigt schematisch ein induktives Randschichthärten eines ungehärteten Laufbahnabschnitts,
- Fig. 2b: zeigt schematisch zu einem Ring zusammengelegte Ringsegmente mit Härteverzug nach der Laufbahnhärtung,
- Fig. 3a: zeigt schematisch ein mechanisches Richten eines oberflächengehärteten Ringsegments,
- Fig. 3b: zeigt schematisch ein Ringsegment nach dem thermischen Richten, und
- Fig. 4: zeigt schematisch eine spanende Bearbeitung eines gerichteten Ringsegments mit einer computergesteuerten Zerspanungsmaschine.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

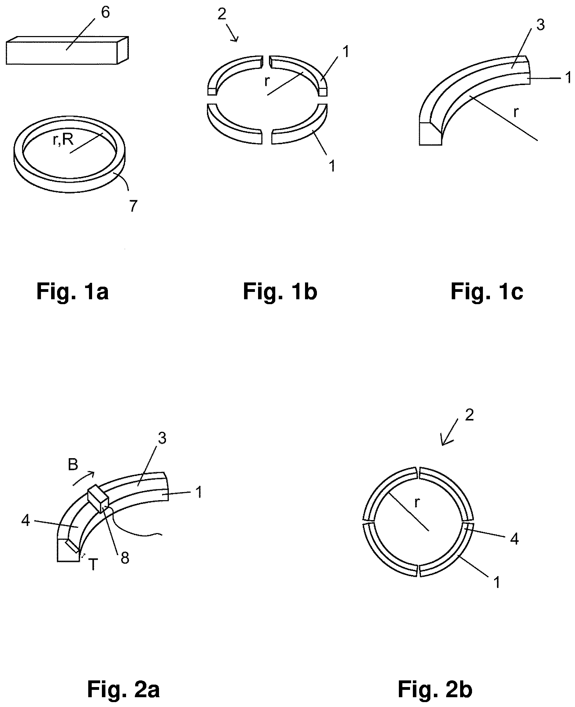

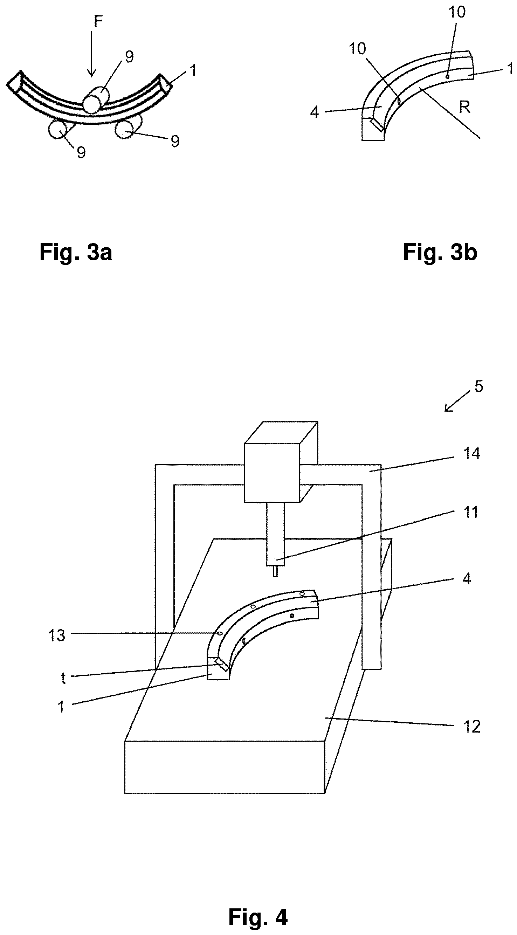

Das erfindungsgemäße Verfahren zum Herstellen von Ringsegmenten 1 für einen segmentierten Wälzlagerring 2 mit mindestens einer gehärteten Wälzlagerlaufbahn ist in einem Ausführungsbeispiel in den Figuren 1 bis 4 schematisch dargestellt. Das Verfahren umfasst die folgenden Schritte:
a) Herstellen von Ringsegmenten 1 aus Wälzlagerstahl mit einem Krümmungsradius r und jeweils mindestens einem ungehärteten Laufbahnabschnitt 3 (Fig. 1a bis 1c),
b) Induktives Randschichthärten zumindest der ungehärteten Laufbahnabschnitte 3 zur Erzeugung gehärteter Laufbahnabschnitte 4 (Fig. 2a und 2b),
c) Richten der Ringsegmente 1 zum Anpassen des Krümmungsradius r an einen Soll-Radius R des segmentierten Wälzlagerrings 2 (Fig. 3a), und
d) Spanende Bearbeitung der Ringsegmente 1 auf vorgegebene Endabmessungen (Fig. 4).

In **Fig. 1a** ist schematisch das Rohmaterial für die Herstellung der Ringsegmente gezeigt. Als Rohmaterial kann beispielsweise Stangenmaterial 6 in Form von Vierkantstählen oder anderen Profilstangen gewählt werden, die zu Ringsegmenten 1 mit einem vorgebbaren Krümmungsradius r gebogen werden.

Alternativ kann ein - vorzugsweise nahtlos gewalzter - Ringrohling 7 Verwendung finden, der in eine Anzahl von Ringsegmenten 1 zerschnitten wird. In diesem Fall weist der Ringrohling vorzugsweise bereits den Soll-Radius R des fertigen segmentierten Wälzlagerrings 2 auf, so dass der Krümmungsradius r der entstehenden Ringsegmente 1 dem Soll-Radius R entspricht. Der Soll-Radius R des Wälzlagerrings beträgt vorzugsweise mindestens 4 Meter.

In **Fig. 1b** ist ein zu einem segmentierten Wälzlagerring 2 zusammengelegter Satz von Ringsegmenten 1 schematisch dargestellt. **Fig. 1c** zeigt ein weiter bearbeitetes Ringsegment 1, an dem - beispielsweise durch Fräsen - ein ungehärteter Laufbahnabschnitt 3 ausgebildet wurde. Denkbar ist aber auch, dass der Laufbahnabschnitt 3 bereits vor dem Biegen bzw. segmentieren des Rohmaterial eingebracht wird.

In **Fig. 2a** ist der Schritt des induktiven Randschichthärtens schematisch dargestellt. Ein Induktor 8 wird in Bewegungsrichtung B über den ungehärteten Laufbahnabschnitt 3 des Ringsegmentes 1 geführt. Das Ringsegment 1 wird dabei im Bereich der Laufbahn 3 stark erhitzt und danach durch eine mitgeführte Brause abgeschreckt. Dadurch wird das Material im Bereich der Laufbahn gehärtet. Es wird ein gehärteter Laufbahnabschnitt 4 mit einer Einhärtetiefe T erzeugt. Alternativ kann das Ringsegment auch gegenüber einem feststehenden Induktor bewegt werden.

**Fig. 2b** zeigt schematisch die Ringsegmente 1 nach der Randschichthärtung der Laufbahnabschnitte 4. Aufgrund des eingetretenen Härteverzugs lassen sich die Ringsegmente 1 nicht mehr zu einem gleichmäßigen Wälzlagerring 2 zusammenlegen. Der Krümmungsradius r der Ringsegmente 1 hat bei der Härtung zugenommen, so dass beim Zusammenlegen Knicke an den Segmenträndern entstehen und die Stöße nicht mehr aneinander anliegen.

Um diesem Effekt entgegenzuwirken kann vorgesehen sein den Krümmungsradius r der Ringsegmente 1 vor dem Randschichthärten unter Berücksichtigung eines zu erwartenden Härteverzuges abweichend von dem Soll-Radius R des segmentierten Wälzlagerrings 2, insbesondere kleiner als der Soll-Radius R, vorzugeben.

**Fig. 3a und 3b** zeigen den Schritt des Richtens nach dem Randschichthärten. In dem gezeigten Ausführungsbeispiel findet vor einem thermischen Richten (Fig. 3b) ein mechanisches Richten (Fig. 3a) statt. Für das mechanische Richten wird das Ringsegment 1 in eine Presse eingebracht, die eine Biegekraft F auf das Ringsegment ausübt. Die Biegekraft F kann beispielsweise über Rollen 9 in einem nicht dargestellten Walzengerüst aufgebracht werden. Das Segment 1 wird durch die Biegekraft F überbogen (plastisch verformt), so dass es beim Loslassen der Biegekraft F eine veränderte Form behält. Hierdurch kann der Krümmungsradius r des Ringsegments mit relativ geringem Zeitaufwand an den Soll-Radius R zumindest grob angepasst werden.

Im Anschluss an das mechanische Richten findet ein thermisches Richten statt (Fig. 3b). Bei dem thermischen Richten werden zur Anpassung des Krümmungsradius r durch stellenweisen Wärmeeintrag lokale Gefügeveränderungen 10 in die Ringsegmente 1 eingebracht. Der Wärmeeintrag erfolgt vorzugsweise durch das zeitweise Aufbringen von Heizeinrichtungen, sogenannten Thermospots. Durch das umgebende kalte Ringmaterial wird die Wärmeausdehnung im Bereich des Thermospots verhindert bzw. zumindest behindert, und es kommt zu einem Staucheffekt. Der Staucheffekt begründet die lokale Gefügeveränderung 10, die beim anschließenden Abkühlen erhalten bleibt, wodurch eine lokale Schrumpfung des Materials bestehen bleibt. Führt man das thermische Verfahren iterativ an mehreren unterschiedlichen Stellen aus, kann der Krümmungsradius r des Ringsegments 1 sehr genau an den Soll-Radius R herangeführt werden.

Die Anpassung des Krümmungsradius r an den Soll-Radius R erfolgt beim Richten vorzugsweise mit einer Toleranz, die es ermöglicht, eine vorgegebene Mindesteinhärtetiefe t (vgl. Fig. 4) über den gesamten gehärteten Laufbahnabschnitt 4 des jeweiligen Ringsegments 1 bei der spanenden Bearbeitung zu erhalten.

Nach dem in Fig. 3a und 3b dargestellten Richten können die Ringsegmente 1 in einem optionalen Verfahrensschritt vor der spanenden Bearbeitung angelassen werden. Das Anlassen erfolgt bevorzugt im Bereich des gehärteten Laufbahnabschnitts 4. Durch das Anlassen können die Materialeigenschaften der Laufbahn an den Einsatzzweck des Wälzlagers weiter angepasst werden.

In **Fig. 4** ist die das Verfahren vorzugsweise abschließende spanende Bearbeitung des Ringsegments 1 gezeigt. In dem dargestellten Ausführungsbeispiel erfolgt die Bearbeitung mit einer computergesteuerten Zerspanungsmaschine 5 anhand eines 3D-Modells. Die spanende Bearbeitung kann einen Bearbeitungsschritt des Fräsens umfassen. Die Zerspanungsmaschine 5 kann beispielsweise ein Fräszentrum sein, das als Portalfräsmaschine mit einem an einem Portal 14 geführten Fräskopf 11 ausgebildet ist.

Für die Bearbeitung wird das Ringsegment 1 auf einen Tisch 12 der Maschine 5 aufgelegt und beispielsweise gegen Anschläge verspannt. Anschließend wird das Ringsegment 1 eingemessen, beispielsweise mit einem maschinenintegrierten Messsystem. Die Realkontur des Ringsegments 1 weicht aufgrund der induktiven Härtung noch von der vorzugsweise durch ein 3D-Modell vorgegebenen Sollkontur ab. Auf Basis der Messwerte werden die Bearbeitungskoordinaten so gewählt, dass mit möglichst wenig Abtrag im gehärteten Bereich die Sollkontur erreicht wird. Im Bereich der induktiv gehärteten Laufbahnabschnitte 4 wird die Oberfläche hartgefräst, insbesondere hartfeingefräst.

Nach der Bearbeitung einer ersten Seite des Ringsegments 1, der Bearbeitung der Stoßenden und dem Einbringen von Befestigungsbohrungen 13 kann es erforderlich sein, das Ringsegment zu wenden und für die Bearbeitung der anderen Seite wieder erneut auf den Maschinentisch 12 aufzulegen. Dabei erfolgt die Ausrichtung des Ringsegments vorzugsweise gemäß der ersten Seite.

Sofern die durch das Fräsen erreichte Oberflächenqualität den Vorgaben entspricht, kann die Bearbeitung nach dem Fräsen beendet werden. Bei höheren Anforderungen an die Oberflächengüte können die Oberflächen, vorzugsweise auf der gleichen Maschine, noch weiterbearbeitet, beispielsweise geschliffen, werden.

Das Folgesegment wird in der gleichen Art und Weise bearbeitet, wobei darauf zu achten ist, dass die Anschlussmaße von Segment zu Segment nahezu keine Abweichungen aufweisen, um im zusammengebauten Zustand eine im Wesentlichen störstellenfreie Funktionsgeometrie zu erhalten.

Die erfindungsgemäß hergestellten Ringsegmente können neben induktiv randschichtgehärteten Laufbahnabschnitten auch weitere Laufbahnsysteme aufweisen, bei denen durchgehärtete Laufbahnplatten oder Laufbahndrähte eingesetzt werden.

### Bezugszeichenliste

- 1: Ringsegment
- 2: segmentierter Wälzlagerring
- 3: ungehärteter Laufbahnabschnitt
- 4: gehärteter Laufbahnabschnitt
- 5: Zerspanungsmaschine
- 6: Stangenmaterial
- 7: Ringrohling
- 8: Induktor
- 9: Rollen
- 10: lokale Gefügeveränderung
- 11: Fräskopf
- 12: Maschinentisch
- 13: Befestigungsbohrung
- 14: Portal

- r: Krümmungsradius
- R: Soll-Radius
- T: Einhärtetiefe
- t: Mindesteinhärtetiefe
- B: Bewegungsrichtung

## Patentansprüche

1. Verfahren zum Herstellen von Ringsegmenten (1) für einen segmentierten Wälzlagerring (2) mit mindestens einer gehärteten Wälzlagerlaufbahn, wobei das Verfahren die folgenden Schritte umfasst:
a) Herstellen von Ringsegmenten (1) aus Wälzlagerstahl mit einem Krümmungsradius (r) und jeweils mindestens einem ungehärteten Laufbahnabschnitt (3),
b) Induktives Randschichthärten zumindest der ungehärteten Laufbahnabschnitte (3) zur Erzeugung gehärteter Laufbahnabschnitte (4), und
d) Spanende Bearbeitung der Ringsegmente (1) auf vorgegebene Endabmessungen,
**dadurch gekennzeichnet, dass** das Verfahren zwischen den Schritten b) und d) den folgenden Schritt umfasst:
c) Richten der Ringsegmente (1) zum Anpassen des Krümmungsradius (r) an einen Soll-Radius (R) des segmentierten Wälzlagerrings (2), wobei das Richten ein thermisches Richten umfasst, bei dem zur Anpassung des Krümmungsradius (r) durch stellenweisen Wärmeeintrag lokale Gefügeveränderungen (10) in die Ringsegmente (1) eingebracht werden.

2. Verfahren zum Herstellen von Ringsegmenten (1) für einen segmentierten Wälzlagerring (2) nach Anspruch 1, **dadurch gekennzeichnet, dass** vor dem thermischen Richten ein mechanisches Richten der Ringsegmente (1) erfolgt.

3. Verfahren zum Herstellen von Ringsegmenten (1) für einen segmentierten Wälzlagerring (2) nach einem der Ansprüche 1 oder 2, **dadurch gekennzeichnet, dass** die Anpassung des Krümmungsradius (r) an den Soll-Radius (R) beim Richten mit einer Toleranz erfolgt, die es ermöglicht, eine vorgegebene Mindesteinhärtetiefe (t) über den gesamten gehärteten Laufbahnabschnitt (4) des jeweiligen Ringsegments (1) bei der spanenden Bearbeitung zu erhalten.

4. Verfahren zum Herstellen von Ringsegmenten (1) für einen segmentierten Wälzlagerring (2) nach einem der Ansprüche 1 bis 3, **dadurch gekennzeichnet, dass** der Krümmungsradius (r) der Ringsegmente (1) vor dem Randschichthärten unter Berücksichtigung eines zu erwartenden Härteverzuges abweichend von dem Soll-Radius (R) des segmentierten Wälzlagerrings (2) vorgegeben wird.

5. Verfahren zum Herstellen von Ringsegmenten (1) für einen segmentierten Wälzlagerring (2) nach einem der Ansprüche 1 bis 4, **dadurch gekennzeichnet, dass** nach dem Richten und vor der spanenden Bearbeitung ein Anlassen der Ringsegmente (1) erfolgt.

6. Verfahren zum Herstellen von Ringsegmenten (1) für einen segmentierten Wälzlagerring (2) nach einem der Ansprüche 1 bis 5, **dadurch gekennzeichnet, dass** die spanende Bearbeitung einen Bearbeitungsschritt des Fräsens des Laufbahnabschnitts (4) des gerichteten Ringsegments (1) umfasst.

7. Verfahren zum Herstellen von Ringsegmenten (1) für einen segmentierten Wälzlagerring (2) nach einem der Ansprüche 1 bis 6, **dadurch gekennzeichnet, dass** die spanende Bearbeitung mit einer computergesteuerten Zerspanungsmaschine (5) anhand eines 3D-Modells erfolgt.

8. Verfahren zum Herstellen von Ringsegmenten (1) für einen segmentierten Wälzlagerring (2) nach Anspruch 7, **dadurch gekennzeichnet, dass** die Zerspanungsmaschine (5) die Geometrie des gerichteten Ringsegments (1) aufnimmt und ein Koordinatensystem des 3D-Modells unter Berücksichtigung des Volumens des im Bereich des gehärteten Laufbahnabschnitts (4) abzutragenden Materials ausrichtet.

9. Verfahren zum Herstellen von Ringsegmenten (1) für einen segmentierten Wälzlagerring (2) nach einem der Ansprüche 1 bis 8, **dadurch gekennzeichnet, dass** der Soll-Radius (R) des Wälzlagerrings mindestens 4 Meter beträgt.

10. Ringsegment (1) für einen segmentierten Wälzlagerring (2) mit mindestens einer gehärteten Wälzlagerlaufbahn, **dadurch gekennzeichnet, dass** das Ringsegment (1) durch ein Verfahren nach einem der Ansprüche 1 bis 9 hergestellt wurde.

11. Ringsegment (1) nach Anspruch 10, **dadurch gekennzeichnet, dass** der induktiv gehärtete Laufbahnabschnitt (4) des Ringsegments (1) eine Mindestrandhärtetiefe von größer oder gleich 4 mm aufweist.

## Claims

1. A method of manufacturing ring segments (1) for a segmented rolling bearing ring (2) having at least one hardened rolling bearing raceway, the method comprising the following steps:
a) manufacturing of ring segments (1) from rolling bearing steel with a radius of curvature (r) and at least one unhardened raceway section (3) in each case,
b) inductive surface hardening of at least the unhardened raceway sections (3) to produce hardened raceway sections (4), and
d) machining of the ring segments (1) to specified final dimensions,
**characterized in that** between steps b) and d) the method comprises the following step:
c) straightening the ring segments (1) to adapt the radius of curvature (r) to a nominal radius (R) of the segmented rolling bearing ring (2), the straightening comprising thermal straightening in which local structural changes (10) are introduced into the ring segments (1) by local heat input to adapt the radius of curvature (r).

2. Method of manufacturing ring segments (1) for a segmented rolling bearing ring (2) according to claim 1, **characterized in that the** ring segments (1) are mechanically straightened before thermal straightening.

3. Method of manufacturing ring segments (1) for a segmented rolling bearing ring (2) according to any one of claims 1 or 2, **characterized in that** the adaptation of the radius of curvature (r) to the nominal radius (R) during straightening is carried out with a tolerance which makes it possible to obtain a predetermined minimum hardening depth (t) over the entire hardened raceway section (4) of the respective ring segment (1) during machining.

4. Method of manufacturing ring segments (1) for a segmented rolling bearing ring (2) according to any one of the claims 1 to 3, **characterized in that** the radius of curvature (r) of the ring segments (1) before the surface layer hardening is predetermined such as to deviate from the nominal radius (R) of the segmented rolling bearing ring (2), wherein an expected hardening distortion is taken into account.

5. Method of manufacturing ring segments (1) for a segmented rolling bearing ring (2) according to any one of claims 1 to 4, **characterized in that** the ring segments (1) are tempered after straightening and before machining.

6. Method of manufacturing ring segments (1) for a segmented rolling bearing ring (2) according to any one of claims 1 to 5, **characterized in that** the machining operation comprises a machining step of milling the raceway portion (4) of the straightened ring segment (1).

7. Method of manufacturing ring segments (1) for a segmented rolling bearing ring (2) according to one of claims 1 to 6, **characterized in that** the machining is carried out with a computer-controlled cutting machine (5) on the basis of a 3D model.

8. Method of manufacturing ring segments (1) for a segmented rolling bearing ring (2) according to claim 7, **characterized in that** the cutting machine (5) records the geometry of the straightened ring segment (1) and aligns a coordinate system of the 3D model taking into account the volume of the material to be removed in the region of the hardened raceway section (4).

9. Method of manufacturing ring segments (1) for a segmented rolling bearing ring (2) according to any one of claims 1 to 8, **characterized in that** the nominal radius (R) of the rolling bearing ring is at least 4 meters.

10. Ring segment (1) for a segmented rolling bearing ring (2) with at least one hardened rolling bearing raceway, **characterized in that** the ring segment (1) has been produced by a process according to one of claims 1 to 9.

11. Ring segment (1) according to claim 10, **characterized in that** the inductively hardened raceway section (4) of the ring segment (1) has a minimum surface hardening depth of greater than or equal to 4 mm.

## Revendications

1. Procédé de fabrication de segments de bague (1) pour une bague de roulement segmentée (2) comportant au moins une piste de roulement durcie, le procédé comprenant les étapes suivantes :
a) fabrication de segments de bagues (1) en acier pour paliers à roulement avec un rayon de courbure (r) et respectivement au moins un tronçon de chemin de roulement (3) non trempé,
b) durcissement par induction de la couche superficielle d'au moins les parties non durcies du chemin de roulement (3) pour produire des parties durcies du chemin de roulement (4), et
d) usinage par enlèvement de copeaux des segments de bague (1) à des dimensions finales prédéfinies,
**caractérisé en ce que** le procédé comprend, entre les étapes b) et d), l'étape suivante:
c) redresser les segments de bague (1) pour adapter le rayon de courbure (r) à un rayon de consigne (R) de la bague de roulement segmentée (2), le redressage comprenant un redressage thermique dans lequel, pour adapter le rayon de courbure (r), des modifications locales de structure (10) sont introduites dans les segments de bague (1) par un apport de chaleur par endroits.

2. Procédé de fabrication de segments de bague (1) pour une bague de roulement segmentée (2) selon la revendication 1, **caractérisé en ce qu'**un dressage mécanique des segments de bague (1) est effectué avant le dressage thermique.

3. Procédé de fabrication de segments de bague (1) pour une bague de roulement segmentée (2) selon l'une des revendications 1 ou 2, **caractérisé en ce que** l'adaptation du rayon de courbure (r) au rayon de consigne (R) s'effectue lors du dressage avec une tolérance qui permet d'obtenir une profondeur de trempe minimale prédéterminée (t) sur l'ensemble de la section de roulement trempée (4) du segment de bague respectif (1) lors de l'usinage par enlèvement de copeaux.

4. Procédé de fabrication de segments de bague (1) pour une bague de roulement segmentée (2) selon l'une des revendications 1 à 3, **caractérisé en ce que** le rayon de courbure (r) des segments de bague (1) est prédéfini avant le durcissement de la couche superficielle en tenant compte d'une déformation de durcissement à attendre, en s'écartant du rayon de consigne (R) de la bague de roulement segmentée (2).

5. Procédé de fabrication de segments de bague (1) pour une bague de roulement segmentée (2) selon l'une des revendications 1 à 4, **caractérisé en ce qu'**après le dressage et avant l'usinage par enlèvement de copeaux, on effectue un revenu des segments de bague (1).

6. Procédé de fabrication de segments de bague (1) pour une bague de roulement segmentée (2) selon l'une des revendications 1 à 5, **caractérisé en ce que** l'usinage comprend une étape de fraisage de la portion de chemin de roulement (4) du segment de bague redressé (1).

7. Procédé de fabrication de segments de bague (1) pour une bague de roulement segmentée (2) selon l'une des revendications 1 à 6, **caractérisé en ce que** l'usinage par enlèvement de copeaux est réalisé avec une machine d'enlèvement de copeaux (5) commandée par ordinateur à l'aide d'un modèle 3D.

8. Procédé de fabrication de segments de bague (1) pour une bague de roulement segmentée (2) selon la revendication 7, **caractérisé en ce que** la machine d'enlèvement de copeaux (5) enregistre la géométrie du segment de bague redressé (1) et oriente un système de coordonnées du modèle 3D en tenant compte du volume du matériau à enlever dans la zone du tronçon de chemin de roulement durci (4).

9. Procédé de fabrication de segments de bague (1) pour une bague de roulement segmentée (2) selon l'une des revendications 1 à 8, **caractérisé en ce que** le rayon de consigne (R) de la bague de roulement est d'au moins 4 mètres.

10. Segment de bague (1) pour une bague de roulement segmentée (2) comportant au moins une piste de roulement trempée, **caractérisé en ce que** le segment de bague (1) a été fabriqué par un procédé selon l'une des revendications 1 à 9.

11. Segment de bague (1) selon la revendication 10, **caractérisé en ce que** la portion de chemin de roulement (4) durcie par induction du segment annulaire (1) présente une profondeur minimale de trempe à coeur supérieure ou égale à 4 mm.
